(19) **Europäisches Patentamt / European Patent Office / Office européen des brevets**

(11) **EP 4 578 546 A1**

(12) **EUROPEAN PATENT APPLICATION**
published in accordance with Art. 153(4) EPC

(43) Date of publication:
02.07.2025 Bulletin 2025/27

(21) Application number: 23856947.9

(22) Date of filing: 20.06.2023

(51) International Patent Classification (IPC):
$B01J\ 29/70^{(2006.01)}$ $B01D\ 53/94^{(2006.01)}$
$B01J\ 20/18^{(2006.01)}$ $B01J\ 20/30^{(2006.01)}$
$B01J\ 29/74^{(2006.01)}$ $B01J\ 37/08^{(2006.01)}$
$C01B\ 39/46^{(2006.01)}$ $F01N\ 3/08^{(2006.01)}$
$F01N\ 3/10^{(2006.01)}$ $F01N\ 3/24^{(2006.01)}$

(52) Cooperative Patent Classification (CPC):
B01D 53/94; B01J 20/18; B01J 20/30; B01J 29/70;
B01J 29/74; B01J 37/08; C01B 39/46; F01N 3/08;
F01N 3/10; F01N 3/24

(86) International application number:
PCT/JP2023/022728

(87) International publication number:
WO 2024/042830 (29.02.2024 Gazette 2024/09)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 25.08.2022 JP 2022134431

(71) Applicant: CATALER CORPORATION
**Kakegawa-shi, Shizuoka 437-1492 (JP)**

(72) Inventors:
• SUGIOKA, Daisuke
 **Kakegawa-shi, Shizuoka 437-1492 (JP)**
• KAWAKAMI, Yuki
 **Kakegawa-shi, Shizuoka 437-1492 (JP)**
• OGAWA, Ryoichi
 **Kakegawa-shi, Shizuoka 437-1492 (JP)**
• CHIBA, Akiya
 **Kakegawa-shi, Shizuoka 437-1492 (JP)**

(74) Representative: **Ricker, Mathias
Wallinger Ricker Schlotter Tostmann
Patent- und Rechtsanwälte Partnerschaft mbB
Zweibrückenstraße 5-7
80331 München (DE)**

(54) **EXHAUST GAS PURIFICATION CATALYST**

(57) An exhaust gas purification catalyst including a BEA-type zeolite, wherein a value of (A1+A2)/A0 calculated using an area A1 of a peak with a peak top between 3,730 cm$^{-1}$ and 3,740 cm$^{-1}$, an area A2 of a peak with a peak top between 3,720cm$^{-1}$ and 3,725cm$^{-1}$, and an area A0 of a peak with a peak top between 1978cm$^{-1}$ and 1983cm$^{-1}$ in FT-IR measurement of the BEA-type zeolite is less than 0.50, and a full width at half maximum of a diffraction peak with $2\theta = 22.5 \pm 0.1°$ in XRD measurement of the BEA-type zeolite is 0.30° or less.

EP 4 578 546 A1

**Description**

FIELD

The present invention relates to an exhaust gas purification catalyst.

BACKGROUND

Exhaust gas from internal combustion engines such as automobile engines contain nitrogen oxides ($NO_x$), carbon monoxide (CO) and hydrocarbons (HC). Such exhaust gas is purified by exhaust gas purification catalyst devices comprising exhaust gas purification catalysts that oxidize CO and HC and reduce NOx before they are released into the air.
Catalytic purification of HC is difficult in the cold state such as at engine start-up, when the catalyst is not warm. Therefore an HC adsorbent is added to an exhaust gas purification catalyst device to adsorb HC in the cold state and to sustain release of HC in the hot state, so that it is provided for catalytic purification.
PTL 1, for example, proposes a hydrocarbon adsorbent comprising BEA zeolite with a $SiO_2/Al_2O_3$ molar ratio (SAR) of lower than 200 and BEA zeolite with an SAR of 200 or higher and 1,000 or lower, explaining that adding this to an exhaust gas purification catalyst device reduces total hydrocarbon (THC) emissions.

[CITATION LIST]

[PATENT LITERATURE]

[PTL 1] Japanese Unexamined Patent Publication No. 2007-275877

SUMMARY

[TECHNICAL PROBLEM]

Using BEA zeolite as an HC adsorbent as proposed in PTL 1 is thought to be effective for reducing HC emissions. However, BEA zeolite is prone to structural defects during synthesis. The structural defects in BEA zeolite include breakage of Si-O-Si bonds which is thought to result in formation of Si-OH groups. Because the Si-OH groups have strong affinity for water, using BEA zeolite with structural defects as an exhaust gas purification catalyst results in obstruction of some of the pores by adsorption of water onto the Si-OH groups, such that the expected HC adsorption capacity is not exhibited.
Obstruction of the pores by adsorbed water is eliminated when the catalyst warms up, but the effects of adsorption water is significant in the cold state, notably inhibiting reduction in HC emissions in the cold range.
The present invention has been completed in light of the circumstances described above.
It is an object of the invention to provide an exhaust gas purification catalyst with few structural defects and excellent HC adsorption capacity in the cold state, and which can reduce HC emissions in the cold range.

[SOLUTION TO PROBLEM]

The present invention is as follows.

<Aspect 1>

An exhaust gas purification catalyst comprising BEA zeolite, wherein:
the value of (A1 + A2)/A0 in FT-IR measurement of the BEA zeolite, calculated using:

the area A1 of the peak having a peak top of 3,730 $cm^{-1}$ or greater and 3,740 $cm^{-1}$ or lower,
the area A2 of the peak having a peak top of 3,720 $cm^{-1}$ or greater and 3,725 $cm^{-1}$ or lower, and
the area A0 of the peak having a peak top of 1,978 $cm^{-1}$ or greater and 1,983 $cm^{-1}$ or lower, is less than 0.50, and
the full width at half maximum of the diffraction peak at $2\theta = 22.5 \pm 0.1°$ in XRD measurement of the BEA zeolite is 0.30° or less.

<Aspect 2>

The exhaust gas purification catalyst according to aspect 1, wherein the silica/alumina ratio (SAR) of the BEA zeolite is 20 or higher.

<Aspect 3>

The exhaust gas purification catalyst according to aspect 1, wherein the (A1 + A2)/A0 value is less than 0.47.

<Aspect 4>

The exhaust gas purification catalyst according to aspect 1, wherein the full width at half maximum of the diffraction peak at $2\theta = 22.5 \pm 0.1°$ is less than 0.29°.

<Aspect 5>

A method for producing an exhaust gas purification catalyst according to any one of aspects 1 to 4, the method comprising:
firing BEA zeolite with an (A1 + A2)/A0 value of 0.50 or greater and a full width at half maximum of the diffraction peak at $2\theta = 22.5 \pm 0.1°$ of 0.30° or less, at a temperature of 650°C or higher and 900°C or lower.

<Aspect 6>

The method according to aspect 5, wherein the firing temperature is 700°C or higher and 800°C or lower.

<Aspect 7>

The method according to aspect 5, wherein the moisture content at the firing temperature is 1.00 vol% or lower in the atmosphere during firing.

<Aspect 8>

The method according to aspect 5, wherein the moisture content at the firing temperature is 0.80 vol% or lower in the atmosphere during firing.

<Aspect 9>

An exhaust gas purification catalyst device having a substrate and a catalyst coating layer on the substrate, wherein the catalyst coating layer includes an exhaust gas purification catalyst according to any one of aspects 1 to 4.

<Aspect 10>

The exhaust gas purification catalyst device according to aspect 9, which is an underfloor catalyst.

<Aspect 11>

An exhaust gas purification catalyst system comprising an exhaust gas purification catalyst device according to aspect 9.

<Aspect 12>

An exhaust gas purification method which comprises disposing an exhaust gas purification catalyst device according to aspect 9 in an exhaust system of an internal combustion engine, and purifying exhaust gas that is emitted from the internal combustion engine.

<Aspect 13>

An exhaust gas purification method which comprises disposing an exhaust gas purification catalyst system according to aspect 11 in an exhaust system of an internal combustion engine, and purifying exhaust gas that is emitted from the internal combustion engine.

[ADVANTAGEOUS EFFECTS OF INVENTION]

Because the exhaust gas purification catalyst of the invention has few structural defects and excellent HC adsorption capacity in the cold state, it can effectively reduce HC emissions in the cold range.

DESCRIPTION OF EMBODIMENTS

<Exhaust gas purification catalyst>

The exhaust gas purification catalyst of the invention is an exhaust gas purification catalyst comprising BEA zeolite, wherein:
the value of (A1 + A2)/A0 in FT-IR measurement of the BEA zeolite, calculated using:

the area A1 of the peak having a peak top of 3,730 cm$^{-1}$ or greater and 3,740 cm$^{-1}$ or lower,
the area A2 of the peak having a peak top of 3,720 cm$^{-1}$ or greater and 3,725 cm$^{-1}$ or lower, and
the area A0 of the peak having a peak top of 1,978 cm$^{-1}$ or greater and 1,983 cm$^{-1}$ or lower, is less than 0.50, and
the full width at half maximum of the diffraction peak at $2\theta = 22.5 \pm 0.1°$ in XRD measurement of the BEA zeolite is 0.30° or less.

The BEA zeolite in the exhaust gas purification catalyst of the invention has an (A1 + A2)/A0 value of less than 0.50, as calculated using area A1, area A2 and area A0 according to FT-IR measurement. This condition for the BEA zeolite in the exhaust gas purification catalyst of the invention ensures that it is BEA zeolite with a low amount of Si-OH groups resulting from structural defects.
With the BEA zeolite in the exhaust gas purification catalyst of the invention, the full width at half maximum of the diffraction peak at $2\theta = 22.5 \pm 0.1°$ is 0.30° or less in XRD measurement. This condition for the BEA zeolite in the exhaust gas purification catalyst of the invention ensures that it is BEA zeolite that sufficiently maintains a crystal structure.
These two conditions for the BEA zeolite in the exhaust gas purification catalyst of the invention ensure that it is BEA zeolite with low structural defects. The exhaust gas purification catalyst of the invention containing such BEA zeolite therefore has excellent HC adsorption capacity in the cold state, and when used in an exhaust gas purification catalyst device it can effectively reduce HC emissions in the cold state.
As mentioned above, the BEA zeolite in the exhaust gas purification catalyst of the invention has an (A1 + A2)/A0 value of less than 0.50, as calculated using area A1, area A2 and area A0 according to FT-IR measurement.
The peak with a peak top of 3,730 cm$^{-1}$ or greater and 3,740 cm$^{-1}$ or lower in FT-IR measurement of the BEA zeolite is attributed to stretching vibration of isolated Si-OH bonds. The peak with a peak top of 3,720 cm$^{-1}$ or greater and 3,725 cm$^{-1}$ or lower is attributed to stretching vibration of hydrogen bonded Si-OH bonds. The peak with a peak top of 1,978 cm$^{-1}$ or greater and 1,983 cm$^{-1}$ or lower is attributed to stretching vibration of Si-O bonds.
Therefore a peak area ratio (A1 + A2)/A0 value for each peak of less than 0.50 in FT-IR measurement of the BEA zeolite corresponds to a low proportion of Si-OH groups to Si-O bonds in the BEA zeolite. Since BEA zeolite with an (A1 + A2)/A0 value of less than 0.50 has a lower amount of Si-OH groups when structural defects occur, the effect of adsorption water onto Si-OH groups is consequently reduced and the expected HC adsorption capacity can be exhibited, even in the cold state.
The area ratio (A1 + A2)/A0 value in FT-IR measurement of the BEA zeolite may be 0.48 or lower, 0.47 or lower, lower than 0.47, 0.45 or lower, 0.40 or lower or 0.35 or lower. However if the area ratio (A1 + A2)/A0 value is lower than needed it becomes necessary to raise the firing temperature during preparation, potentially resulting in breakdown of the BEA zeolite crystal structure and loss of HC adsorption capacity. From this viewpoint the area ratio (A1 + A2)/A0 value may be 0.10 or higher, 0.15 or higher, 0.20 or higher, 0.25 or higher or 0.30 or higher.
The areas A1, A2 and A0 in FT-IR measurement of the BEA zeolite can be quantified by peak fitting as described in the present Examples, based on the obtained FT-IR spectrum.
With the BEA zeolite in the exhaust gas purification catalyst of the invention, the full width at half maximum of the diffraction peak at $2\theta = 22.5 \pm 0.1°$ is 0.30° or less in XRD measurement. The diffraction peak at $2\theta = 22.5 \pm 0.1°$ in XRD measurement is a characteristic peak for BEA zeolite. If the full width at half maximum of this diffraction peak is 0.30° or less, the BEA zeolite of the invention will be ensured to be zeolite with a sufficiently developed BEA-type crystal structure.
The full width at half maximum of the diffraction peak at $2\theta = 22.5 \pm 0.1°$ in XRD measurement may be 0.29° or less, less than 0.29°, 0.28° or less, 0.26° or less or 0.24° or less. Even an excessively narrow full width at half maximum of the diffraction peak at $2\theta = 22.5 \pm 0.1°$ does not increase the expected effect of the invention in an inversely proportional manner. The full width at half maximum of the diffraction peak at $2\theta = 22.5 \pm 0.1°$ may therefore be 0.10° or greater, 0.15° or greater or 0.20° or greater.
The silica/alumina ratio (SAR) of the BEA zeolite in the exhaust gas purification catalyst of the invention may be 20 or higher, 25 or higher, 30 or higher, 35 or higher or 40 or higher, in order to ensure ease of synthesis. From the viewpoint of increasing the HC adsorption capacity, the SAR of the BEA zeolite may be 100 or lower, 80 or lower, 60 or lower or 50 or lower. The SAR value is defined as the molar ratio of silica ($SiO_2$)/alumina ($Al_2O_3$).

The BEA zeolite in the exhaust gas purification catalyst of the invention may be chemically pure BEA zeolite, or it may contain other components. Examples of such other components include alkali metals, alkaline earth metals, rare earth metals and noble metals, and oxides of the same. The other components may substitute for elements in the BEA zeolite skeleton, or they may exist in solid solution with the BEA zeolite or be supported on the BEA zeolite.

The exhaust gas purification catalyst of the invention includes a specified BEA zeolite as explained above. The exhaust gas purification catalyst of the invention may also include components other than the specified BEA zeolite. Components other than BEA zeolite in the exhaust gas purification catalyst of the invention may be zeolite other than BEA zeolite, or other inorganic oxides, for example.

The exhaust gas purification catalyst of the invention may include the specified BEA zeolite at 70 mass% or greater, 80 mass% or greater, 85 mass% or greater, 90 mass% or greater, 95 mass% or greater, 98 mass% or greater or 99 mass% or greater, or even 100 mass%, with respect to the total mass of the exhaust gas purification catalyst.

The exhaust gas purification catalyst of the invention may be in particulate form. When the exhaust gas purification catalyst of the invention is in particulate form, the mean particle size may be 0.1 $\mu$m or greater, 0.5 $\mu$m or greater or 1.0 $\mu$m or greater, for example, and 500 $\mu$m or smaller, 300 $\mu$m or smaller, 100 $\mu$m or smaller or 50 $\mu$m or smaller, for example.

<Method for producing exhaust gas purification catalyst>

The exhaust gas purification catalyst of the invention may be produced by any method so long as it has the features described above.

For example, the exhaust gas purification catalyst of the invention may be produced by a method which includes: firing BEA zeolite (zeolite starting material) at a temperature of 650°C or higher and 900°C or lower, wherein:

the peak area ratio (A1 + A2)/A0 value in FT-IR measurement is 0.50 or higher, and
the full width at half maximum of the diffraction peak at $2\theta$ = 22.5 $\pm$0.1° in XRD measurement is 0.30° or less.

The zeolite starting material is zeolite which has a BEA zeolite crystal structure but has relatively many structural defects and therefore a high content of Si-OH groups. Firing of the zeolite starting material at 650°C or higher causes dehydration of the Si-OH groups, resulting in formation of Si-O-Si bonds and repair of the structural defects. If the firing temperature for the zeolite starting material is kept at 900°C or lower, heat-induced breakdown of the BEA zeolite crystal structure will be avoided. The firing temperature for the zeolite starting material may be 670°C or higher, 700°C or higher, 720°C or higher or 750°C or higher, and 880°C or lower, 850°C or lower, 830°C or lower or 800°C or lower.

The firing temperature for the zeolite starting material will typically be 700°C or higher and 800°C or lower, for example.

When firing the zeolite starting material, a low moisture content of the ambient atmosphere is preferred in order for dehydration of the Si-OH groups in the zeolite starting material to proceed smoothly. From this viewpoint, the moisture content at the firing temperature in the atmosphere during firing may be 10.0 vol% or lower, 5.00 vol% or lower, 3.00 vol% or lower, 1.00 vol% or lower, 0.90 vol% or lower, 0.80 vol% or lower, 0.60 vol% or lower, 0.40 vol% or lower or 0.20 vol% or lower, or even 0 vol%.

The firing time for the zeolite starting material may be 10 minutes or longer, 30 minutes or longer, 60 minutes or longer, 90 minutes or longer, 120 minutes or longer, 15 minutes or longer, 180 minutes or longer, 210 minutes or longer, 240 minutes or longer or 270 minutes or longer, and 1,500 minutes or less, 1,000 minutes or less, 720 minutes or less, 660 minutes or less, 600 minutes or less, 540 minutes or less, 480 minutes or less or 420 minutes or less.

The exhaust gas purification catalyst of the invention can be produced in the manner described above, as an example. The exhaust gas purification catalyst of the invention may be provided for use after pulverizing and classification, as necessary.

<Exhaust gas purification catalyst device>

Yet another aspect of the invention provides an exhaust gas purification catalyst device.

The exhaust gas purification catalyst device of the invention is an exhaust gas purification catalyst device having a substrate and a catalyst coating layer on the substrate, wherein the catalyst coating layer includes an exhaust gas purification catalyst of the invention.

<Substrate>

The substrate may be appropriately selected from among publicly known substrates for exhaust gas purification catalyst devices. For example, it may be a straight flow type or wall flow type monolith honeycomb substrate composed of a material such as cordierite, SiC, stainless steel or inorganic oxide particles.

<Coating layer>

The coating layer of the exhaust gas purification catalyst device of the invention includes an exhaust gas purification catalyst of the invention.

The coating layer of the exhaust gas purification catalyst device of the invention may also include other optional components as necessary in addition to the exhaust gas purification catalyst of the invention. The optional components may be inorganic oxides, noble metals, or binders, for example. An inorganic oxide may be an oxide of silica, alumina, zirconia, titania or a rare earth element, or a complex oxide comprising two or more of the same. A noble metal may be of the platinum group, such as one or more selected from among platinum, palladium and rhodium. A binder may be selected from among alumina sol and titania sol, for example.

The coating layer of the exhaust gas purification catalyst device of the invention may be a coating layer with a monolayer structure composed entirely of a coating layer containing the exhaust gas purification catalyst of the invention, or it may be a coating layer with a laminated structure comprising two or more coating layers containing the exhaust gas purification catalyst of the invention, or it may be a coating layer with a laminated structure having two or more coating layers comprising the exhaust gas purification catalyst of the invention, and also having another coating layer. The other coating layer may be any coating layer that includes an inorganic oxide, a noble metal and a binder, for example.

The exhaust gas purification catalyst device of the invention preferably comprises a fixed amount of a specified BEA zeolite of the invention. The amount of BEA zeolite per 1 L of substrate capacity in the exhaust gas purification catalyst device of the invention may be 1 g/L or greater, 5 g/L or greater, 10 g/L or greater, 15 g/L or greater or 20 g/L or greater, and 200 g/L or less, 150 g/L or less, 100 g/L or less, 80 g/L or less, 60 g/L or less, 50 g/L or less or 40 g/L or less, for example.

<Uses>

The exhaust gas purification catalyst device of the invention may be used as an exhaust gas purification device for devices that include internal combustion engines (such as tools, generators and high-pressure cleaners), or as an underfloor catalyst device for an automobile that includes an internal combustion engine.

<Exhaust gas purification catalyst system>

Yet another aspect of the invention provides an exhaust gas purification catalyst system.

The exhaust gas purification catalyst system of the invention includes an exhaust gas purification catalyst device of the invention.

The exhaust gas purification catalyst system of the invention may be a system comprising a start-up catalytic device, and an exhaust gas purification catalyst device of the invention as an underfloor catalyst device. The start-up catalytic device used may be selected as appropriate from among publicly known start-up catalytic devices for automobiles that include internal combustion engines.

<Exhaust gas purification method>

Yet another aspect of the invention provides an exhaust gas purification method.

Examples of embodiments of the exhaust gas purification method of the invention include:

disposing an exhaust gas purification catalyst device of the invention in the exhaust system of an internal combustion engine and purifying exhaust gas emitted from the internal combustion engine; and disposing an exhaust gas purification catalyst system of the invention in the exhaust system of an internal combustion engine and purifying exhaust gas emitted from the internal combustion engine.

EXAMPLES

<Examples 1 to 9 and Comparative Examples 1 to 5>

In Examples 1 to 9 and Comparative Examples 1 to 5, changes in the SiOH amount in zeolite, the full width at half maximum of the diffraction peak attributed to BEA zeolite, and the decane adsorption in the copresence of water, were examined under different firing conditions. The SiOH amount in zeolite and the full width at half maximum of the diffraction peak were measured in the following manner.

1. Zeolite SiOH amount

The zeolite SiOH amount was measured using FT-IR, by the following procedure according to JIS K0117:2017 (Infrared spectroscopic analysis protocol).

Each of the zeolite samples obtained in the Examples and Comparative Examples was crushed with a mortar. A 10 mg portion of the crushed product was compression molded under a pressure of 10 MPa to fabricate a 10 mm-diameter disk sample. FT-IR measurement of the obtained disk sample was conducted under the following conditions.

Analyzer: "FT/IR-6600" Fourier transform infrared spectrometer by JASCO Corp.
Method: Transmission method
Measuring wavelength range: 4,000 $cm^{-1}$ or higher and 1,000 $cm^{-1}$ or lower.
Resolving power: 4 $cm^{-1}$
Detector: Mid band mercury cadmium telluride (MCT) detector
Number of scans: 64
Measuring temperature: 500°C
Measuring atmosphere: 10 vol%-$O_2$/$N_2$ circulation

The spectrum of zeolite is measured after loading the disk sample into the sample chamber of the analyzer, heating from room temperature to 500°C at a temperature-elevating rate of 20°C/min under 10 vol%-$O_2$/$N_2$ circulation, and holding it for 10 minutes at a temperature of 500°C.

The background spectrum was measured in the same manner as the zeolite spectrum, except that an empty cell was loaded into the sample chamber instead of a disk sample.

The obtained zeolite FT-IR spectrum was analyzed in the following manner, after subtracting the background spectrum from the sample spectrum using "JASCO Spectrum Manager Ver.2" analysis software by JASCO Corp.

(1) Calculation of SiOH-attributed peak area (A1, A2)

The baseline was set by 2-point correction, connecting the absorbance at a wavenumber of 4,000 $cm^{-1}$ to the absorbance at a wavenumber of 3,000 $cm^{-1}$ with a straight line. The spectrum in a range from a wavenumber of 3,900 $cm^{-1}$ or higher and 3,500 $cm^{-1}$ or lower was fitted using the peaks of Peak Nos. 1 to 5 shown in Table 1. Area A1 of the peak of Peak No. 1 and area A2 of the peak of Peak No. 2 were defined as the amount of SiOH on the zeolite outer surface and the amount of SiOH on the zeolite inner surface, respectively. Fitting was with reference to non-patent literature ("Materials Today: Proceedings 42(2021) pp211-216").

[Table 1]

Table 1

| Peak No. | Peak top location ($cm^{-1}$) | Full width at half maximum ($cm^{-1}$) | Peak shape function | Note |
|---|---|---|---|---|
| 1 | 3,730 - 3,740 | 18 - 19 | Gaussian function 100% | Outer surface SiOH: A1 |
| 2 | 3,720 - 3,725 | 47 - 52 | Gaussian function 100% | Inner surface SiOH: A2 |
| 3 | 3,665 - 3,670 | 82 - 83 | Gaussian function 100% | |
| 4 | 3,600 - 3,610 | 77 - 83 | Gaussian function 100% | |
| 5 | 3,520 - 3,525 | 117 - 118 | Gaussian function 100% | |

(2) Calculation of SiO-attributed peak area A0

The baseline was set by 1 point correction based on the absorbance at a wavenumber of 2,120 $cm^{-1}$. The spectrum in a range from a wavenumber of 2,000 $cm^{-1}$ or higher and 1,500 $cm^{-1}$ or lower was fitted using the peaks of Peak Nos. 1 to 3 shown in Table 2. Area A0 of the peak of Peak No. 1 was defined as the zeolite SiO amount. Fitting was with reference to non-patent literature ("Applied Catalysis A: General 200(2000) pp125-134").

[Table 2]

Table 2

| Peak No. | Peak top location (cm⁻¹) | Full width at half maximum (cm⁻¹) | Peak shape function | Note |
|---|---|---|---|---|
| 1 | 1,978 - 1,983 | 113 - 118 | Gaussian function 100% | SiO: A0 |
| 2 | 1,854 - 1,864 | 82 - 106 | Gaussian function 100% | |
| 3 | 1,618 - 1,650 | 164 - 189 | Gaussian function 100% | |

(3) Calculation of SiOH amount in zeolite sample

The SiOH amount in the zeolite skeleton (SiO) (the total of the outer surface SiOH amount and the inner surface SiOH amount) was calculated by the following formula.

$$\text{SiOH amount} = (A1 + A2)/A0$$

2. Full width at half maximum of diffraction peak attributed to BEA zeolite

The full width at half maximum of the diffraction peak attributed to BEA zeolite was determined by the following method based on the results of X-ray diffraction (XRD) under the following conditions, following JIS K0131:1996 (X-ray diffraction analysis protocol).

Analyzer: "RINT-TTR III" X-ray diffraction system by Rigaku Corp.
Scanning axis: $2\theta/\theta$
Source: $CuK_\alpha$
Measuring mode: Continuous
Voltage: 40 kV
Current: 250 mA
Measurement range: $2\theta = 5$ to 85°
Sampling width: 0.02°
Scan speed: 8.00°/min
Divergence slit: 1°
Vertical divergence restriction slit: 10 mm
Scattering slit: 8 mm
Receiving slit: 13 mm

The obtained XRD pattern was data processed using "PDXL2" integrated powder X-ray analysis software by Rigaku Corp., under the following conditions.

Data processing mode: automatic
Peak search conditions

$\sigma$ cut value: 3.00
$\sigma$ cut range: 0.50-20.00

Of the obtained peaks, the peak having a peak top at $2\theta = 22.5 \pm 0.1°$ is defined as the diffraction peak for BEA zeolite, and its full width at half maximum is calculated.

3. Decane adsorption in the copresence of water

The zeolite samples obtained in the Examples and Comparative Examples were examined for decane adsorption in the copresence of water, by the following procedure.

The zeolite sample was crushed with a mortar. A 3.0 g portion of the crushed product was compression molded for 1 minute under a pressure of 26 MPa to fabricate a 35 mm-diameter disk sample. The obtained disk sample was coarsely crushed with a mortar and classified, to obtain a pellet sample having a size of 0.5 mm or greater and 1.0 mm or smaller.

The pellet sample was allowed to stand in a dryer at 250°C for 30 minutes, to obtain a dried pellet sample. The pellet sample with a dry mass of 0.5 g was filled into an adsorption device ("SIGU-1000" Catalyst evaluation device by Horiba, Ltd.) and the temperature was raised from room temperature to 500°C at a temperature-elevating rate of 25°C/min, with 10 vol%-$O_2$/$N_2$ circulation, and then held at 500°C for 10 minutes. This was followed by pretreatment to remove the hydrocarbons and water remaining in the pores of the zeolite sample. After lowering the sample temperature to 100°C, a decane-containing model gas with the following composition was circulated through the adsorption device at a flow rate of 5 L/min for 15 minutes to adsorb decane onto the zeolite sample. The gas concentration at this time was measured using a "MEXA-ONE-FT" FTIR Engine exhaust gas analyzer by Horiba, Ltd.

    Decane: 3,000 ppm-C (3,000 ppm in terms of carbon mass).
    Water: 3 vol%
    Nitrogen: balance

After circulating the decane-containing model gas for 15 minutes, the circulating gas was switched to 100% nitrogen and kept at 100°C for 5 minutes. The sample temperature was then raised to 550°C at a temperature-elevating rate of 20°C/min while maintaining circulation of nitrogen, to desorb the decane from the zeolite sample. The accumulated amount of desorbed decane was recorded as the decane adsorption (mg/g-zeolite) in the copresence of water.

<Example 1>

Commercially available BEA zeolite (High-Silica-Zeolite HSZ-940HOA, $SiO_2$/$Al_2O_3$(SAR) = 40, product of Tosoh Corp.) as the starting material was fired for 300 minutes at 700°C, atmospheric pressure. The firing was carried out by heating from room temperature to the target temperature (700°C) at a temperature-elevating rate of 25°C/min using an electric furnace at atmospheric pressure, and holding at the target temperature for 300 minutes. The heater of the electric furnace was then switched off and the sample in the electric furnace was allowed to cool to room temperature. The $H_2O$ concentration of the firing atmosphere at the target temperature (700°C) was 0.90 vol%.

The fired zeolite was used for the measurement described above. The results are shown in Table 3.

<Examples 2 to 9 and Comparative Examples 1 to 5>

Zeolite samples were obtained by firing in the same manner as Example 1, except for changing the firing conditions as shown in Table 3. The obtained zeolite samples were used for the measurements described above.

In Comparative Example 1, the BEA zeolite starting material was measured directly without firing. In Example 2, firing was carried out in an atmosphere composed of 20 vol% oxygen and 80 vol% nitrogen. In Examples 3 to 6, firing was carried out in an atmosphere with the $H_2O$ concentration adjusted as shown in Table 3, using a mixed gas comprising 20 vol% oxygen and 80 vol% nitrogen, and a humidified atmosphere with a 10 vol% moisture content ($H_2O$ concentration) at the firing temperature, in a specified ratio. In Example 8, firing was carried out in a humidified atmosphere with a moisture content ($H_2O$ concentration) of 10 vol% at the firing temperature.

In XRD analysis of the zeolite sample of Comparative Example 5, no diffraction peak was detected at $2\theta = 22.5 \pm 0.1°$.

The results are shown in Table 3.

[Table 3]

Table 3

| | Starting material | | Firing conditions | | | | Evaluation results | | |
|---|---|---|---|---|---|---|---|---|---|
| | Type | SAR | Temp. (°C) | Atmosphere | $H_2O$ conc. (vol%) | Time (min) | SiOH amount = (A1 + A2)/A0 | Full width at half maximum of $2\theta=22.5°$ peak (°) | Decane adsorption in copresence of water (mg/g) |
| Comp. Example 1 | BEA zeolite | 40 | - | - | - | - | 0.51 | 0.21 | 87.91 |
| Comp. Example 2 | BEA zeolite | 40 | 500 | Atmospheric pressure | 0.90 | 300 | 0.50 | 0.20 | 87.53 |
| Comp. Example 3 | BEA zeolite | 40 | 600 | Atmospheric pressure | 0.90 | 300 | 0.50 | 0.22 | 87.46 |
| Example 1 | BEA zeolite | 40 | 700 | Atmospheric pressure | 0.90 | 300 | 0.45 | 0.21 | 94.99 |
| Example 2 | BEA zeolite | 40 | 800 | 20% $O_2$/80% $N_2$ | 0.00 | 300 | 0.33 | 0.23 | 99.61 |
| Example 3 | BEA zeolite | 40 | 800 | 20% $O_2$/80% $N_2$ + 10% humidified atmosphere | 0.20 | 300 | 0.35 | 0.23 | 99.45 |
| Example 4 | BEA zeolite | 40 | 800 | 20% $O_2$/80% $N_2$ + 10% humidified atmosphere | 0.42 | 300 | 0.37 | 0.23 | 98.80 |
| Example 5 | BEA zeolite | 40 | 800 | 20% $O_2$/80% $N_2$ + 10% humidified atmosphere | 0.59 | 300 | 0.37 | 0.23 | 98.62 |
| Example 6 | BEA zeolite | 40 | 800 | 20% $O_2$/80% $N_2$ + 10% humidified atmosphere | 0.84 | 300 | 0.40 | 0.23 | 97.35 |
| Example 7 | BEA zeolite | 40 | 800 | Atmospheric pressure | 0.90 | 300 | 0.41 | 0.22 | 97.06 |
| Example 8 | BEA zeolite | 40 | 800 | 10% humidified atmosphere | 10.0 | 300 | 0.47 | 0.22 | 93.20 |
| Example 9 | BEA zeolite | 40 | 900 | Atmospheric pressure | 0.90 | 300 | 0.30 | 0.28 | 90.11 |
| Comp. Example 4 | BEA zeolite | 40 | 1000 | Atmospheric pressure | 0.90 | 300 | 0.11 | 0.40 | 0.85 |
| Comp. Example 5 | BEA zeolite | 40 | 1100 | Atmospheric pressure | 0.90 | 300 | 0.13 | Not detected | 1.01 |

The following may be concluded from the results in Table 3.

The samples of Comparative Example 1 in which the BEA zeolite starting material was not fired and the samples of Comparative Examples 2 and 3 which used firing temperatures of lower than 650°C had full widths at half maximum of 0.30 or lower for the peak at $2\theta = 22.5 \pm 0.1°$ in XRD, with the crystal structure of BEA zeolite maintained, but with a SiOH amount of 0.50 or greater. These samples had low values for decane adsorption in the presence of water.

The samples of Comparative Examples 4 and 5, where the firing temperature of the BEA zeolite starting material was higher than 900°C, had low SiOH amounts of less than 0.50, but since the full width at half maximum of the peak at $2\theta = 22.5 \pm 0.1°$ in XRD was greater than 0.30 or no peak was detected at $2\theta = 22.5 \pm 0.1°$, this suggested breakdown of the BEA zeolite crystal structure. These samples had extremely low values for decane adsorption in the presence of water. This may be because breakdown of the BEA zeolite pore structure made them unable to adsorb decane.

In contrast, with the samples of Examples 1 to 9 wherein the firing temperature of the BEA zeolite starting material was 650°C or higher and 900°C or lower, the full width at half maximum of the peak at $2\theta = 22.5 \pm 0.1°$ in XRD was less than 0.29, the BEA zeolite crystal structure was maintained, and the SiOH amount was low at less than 0.50. These samples had high values for decane adsorption in the presence of water. Based on comparison of Examples 2 to 8, when the same firing temperature was used, a lower moisture content ($H_2O$ concentration) in the atmosphere during firing tended to result in more decane adsorption in the presence of water.

<Actual vehicle evaluation>

The zeolite samples obtained in Examples 2 and 7 and Comparative Example 1 were each used to examine HC emissions in an actual vehicle evaluation, in order to verify the effect of exhaust gas purification catalyst systems comprising exhaust gas purification catalysts of the invention.

The exhaust gas purification catalyst system comprised:

a start-up catalytic device having a catalyst coating layer containing Pd (lower layer) and a catalyst coating layer containing Rh (upper layer) formed in that order on a cordierite straight-type honeycomb substrate, and
an underfloor catalyst device having a catalyst coating layer containing the zeolite sample of Example 2 or 7 or Comparative Example 1 (lower layer), a catalyst coating layer containing Pd (intermediate layer) and a catalyst coating layer containing Rh (upper layer), formed in that order on the same honeycomb substrate.

For Comparative Example 6, the actual vehicle evaluation was conducted using an exhaust gas purification catalyst system comprising:

the aforementioned start-up catalytic device, and
an underfloor catalyst device having a catalyst coating layer containing Pd (lower layer) and a catalyst coating layer containing Rh (upper layer) formed in that order on a honeycomb substrate.

Each exhaust gas purification catalyst system was installed in a gasoline engine vehicle with a cylinder capacity of 1,500 cc, and a total hydrocarbon (THC) concentration measuring device was mounted on the outer side of the underfloor catalyst device. The vehicle was driven in WLTC mode on a chassis dynamometer, and the cumulative emission of THC in the LOW phase (0 sec or longer and 600 sec or less in WLTC mode) was determined and recorded as the HC emission (mg/km) in the cold range. The results are shown in Table 4.

[Table 4]

Table 4

| | SiOH amount $(A1 + A2)/A0$ | Full width at half maximum of $2\theta=22.5°$ peak (°) | HC emission in cold range | | |
| --- | --- | --- | --- | --- | --- |
| | | | Measured value (mg/km) | Reduction relative to Comp. Example 6 (mg/km) | Improvement rate relative to Comp. Example 1 (%) |
| Example 2 | 0.33 | 0.23 | 13.00 | 3.81 | 43.8 |
| Example 7 | 0.41 | 0.22 | 13.26 | 3.55 | 34.0 |
| Comp. Ex. 1 | 0.51 | 0.21 | 14.16 | 2.65 | - |

(continued)

| | SiOH amount (A1 + A2)/A0 | Full width at half maximum of 2θ=22.5° peak (°) | HC emission in cold range | | |
|---|---|---|---|---|---|
| | | | Measured value (mg/km) | Reduction relative to Comp. Example 6 (mg/km) | Improvement rate relative to Comp. Example 1 (%) |
| Comp. Ex. 6 | - | - | 16.81 | - | - |

The HC emission of the exhaust gas purification catalyst system of Comparative Example 6 in the cold range was 16.81 mg/km, using an underfloor catalyst device without a zeolite-containing catalyst coating layer.

The HC emission of the exhaust gas purification catalyst system using an underfloor catalyst device having a catalyst coating layer containing the zeolite of Comparative Example 1, which did not satisfy the conditions of the invention, was 14.16 mg/km. In other words, the reduction in HC emission using the underfloor catalyst device with the exhaust gas purification catalyst system of Comparative Example 1 was improved by 2.65 mg/km compared to the underfloor catalyst device of Comparative Example 6 (16.81 - 14.16 = 2.65 (mg/km)).

In contrast, the HC emissions of the exhaust gas purification catalyst systems using underfloor catalyst devices having catalyst coating layers containing the zeolites of Examples 2 and 7, which satisfied the conditions of the invention, were 13.00 mg/km in Example 2 and 13.26 mg/km in Example 7. In other words, compared to the underfloor catalyst device of Comparative Example 6:

the reduction in HC emission with the underfloor catalyst device having a catalyst coating layer containing the zeolite of Example 2 was 3.81 mg/km (= 16.81 - 13.00 = 3.81 (mg/km)), and

the reduction in HC emission with the underfloor catalyst device having a catalyst coating layer containing the zeolite of Example 7 was 3.55 mg/km (= 16.81 - 13.26 = 3.55 (mg/km)).

This demonstrated that using the zeolites of Examples 2 and 7 which satisfy the conditions of the invention significantly improved HC emissions compared to using the zeolite of Comparative Example 1 which did not satisfy the conditions of the invention. The improvement rates in HC emission were:

$$\text{Example 2: } 43.8\% \ (\{3.81 - 2.65\}/2.65\} \times 100 = 43.8(\%)),$$

and

$$\text{Example 7: } 34.0\% (\{3.55 - 2.65\}/2.65\} \times 100 = 34.0(\%)).$$

The results in Table 4 confirmed that an exhaust gas purification catalyst system comprising an exhaust gas purification catalyst of the invention is effective for reducing HC emissions in the cold range.

**Claims**

1. An exhaust gas purification catalyst comprising BEA zeolite, wherein:
   the value of (A1 + A2)/A0 in FT-IR measurement of the BEA zeolite, calculated using:

   the area A1 of the peak having a peak top of 3,730 cm$^{-1}$ or greater and 3,740 cm$^{-1}$ or lower,
   the area A2 of the peak having a peak top of 3,720 cm$^{-1}$ or greater and 3,725 cm$^{-1}$ or lower, and
   the area A0 of the peak having a peak top of 1,978 cm$^{-1}$ or greater and 1,983 cm$^{-1}$ or lower, is less than 0.50, and
   the full width at half maximum of the diffraction peak at 2θ = 22.5 $\pm$ 0.1° in XRD measurement of the BEA zeolite is 0.30° or less.

2. The exhaust gas purification catalyst according to claim 1, wherein the silica/alumina ratio (SAR) of the BEA zeolite is 20 or higher.

3. The exhaust gas purification catalyst according to claim 1, wherein the (A1 + A2)/A0 value is less than 0.47.

4. The exhaust gas purification catalyst according to claim 1, wherein the full width at half maximum of the diffraction peak at 2θ = 22.5 ±0.1° is less than 0.29°.

5. A method for producing an exhaust gas purification catalyst according to any one of claims 1 to 4, the method comprising:
   firing BEA zeolite with an (A1 + A2)/A0 value of 0.50 or greater and a full width at half maximum of the diffraction peak at 2θ = 22.5 ±0.1° of 0.30° or less, at a temperature of 650°C or higher and 900°C or lower.

6. The method according to claim 5, wherein the firing temperature is 700°C or higher and 800°C or lower.

7. The method according to claim 5, wherein the moisture content at the firing temperature is 1.00 vol% or lower in the atmosphere during firing.

8. The method according to claim 5, wherein the moisture content at the firing temperature is 0.80 vol% or lower in the atmosphere during firing.

9. An exhaust gas purification catalyst device having a substrate and a catalyst coating layer on the substrate, wherein the catalyst coating layer includes an exhaust gas purification catalyst according to any one of claims 1 to 4.

10. The exhaust gas purification catalyst device according to claim 9, which is an underfloor catalyst.

11. An exhaust gas purification catalyst system comprising an exhaust gas purification catalyst device according to claim 9.

12. An exhaust gas purification method which comprises disposing an exhaust gas purification catalyst device according to claim 9 in an exhaust system of an internal combustion engine, and purifying exhaust gas that is emitted from the internal combustion engine.

13. An exhaust gas purification method which comprises disposing an exhaust gas purification catalyst system according to claim 11 in an exhaust system of an internal combustion engine, and purifying exhaust gas that is emitted from the internal combustion engine.

## INTERNATIONAL SEARCH REPORT

| International application No. |
| --- |
| **PCT/JP2023/022728** |

### A. CLASSIFICATION OF SUBJECT MATTER

***B01J 29/70***(2006.01)i; ***B01D 53/94***(2006.01)i; ***B01J 20/18***(2006.01)i; ***B01J 20/30***(2006.01)i; ***B01J 29/74***(2006.01)i; ***B01J 37/08***(2006.01)i; ***C01B 39/46***(2006.01)i; ***F01N 3/08***(2006.01)i; ***F01N 3/10***(2006.01)i; ***F01N 3/24***(2006.01)i

FI: B01J29/70 A ZAB; B01D53/94 222; B01D53/94 245; B01D53/94 280; B01J20/18 B; B01J20/30; B01J29/74 A; B01J37/08; C01B39/46; F01N3/08 A; F01N3/10 A; F01N3/24 E

According to International Patent Classification (IPC) or to both national classification and IPC

### B. FIELDS SEARCHED

Minimum documentation searched (classification system followed by classification symbols)

B01J29/70; B01D53/94; B01J20/18; B01J20/30; B01J29/74; B01J37/08; C01B39/46; F01N3/08; F01N3/10; F01N3/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| X | JP 2011-126768 A (NIPPON CHEM. IND. CO., LTD.) 30 June 2011 (2011-06-30) claims, paragraphs [0044], [0049], [0061]-[0064] | 1, 4, 9, 11-13 |
| Y | claims, paragraphs [0044], [0049], [0061]-[0064] | 10 |
| Y | JP 2022-114539 A (NE CHEMCAT CORP.) 08 August 2022 (2022-08-08) claims, paragraphs [0013], [0032], [0048] | 10 |
| Y | JP 2016-532055 A (UMICORE AG. & CO. KG.) 13 October 2016 (2016-10-13) claims, paragraph [0040] | 10 |
| A | WO 2019/117183 A1 (TOSOH CORP.) 20 June 2019 (2019-06-20) entire text, all drawings | 1-13 |
| A | JP 2003-260362 A (BABCOCK HITACHI KK) 16 September 2003 (2003-09-16) entire text, all drawings | 1-13 |
| A | JP 2018-506500 A (BASF SE) 08 March 2018 (2018-03-08) entire text, all drawings | 1-13 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **10 August 2023** | **29 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

| International application No. |
|---|
| **PCT/JP2023/022728** |

| Patent document cited in search report | | | Publication date (day/month/year) | Patent family member(s) | | | Publication date (day/month/year) |
|---|---|---|---|---|---|---|---|
| JP | 2011-126768 | A | 30 June 2011 | US 2012/0190534 A1<br>claims, paragraphs [0083]-[0084], [0089], [0099]-[0102]<br>EP 2457872 A1<br>KR 10-2012-0039663 A<br>CN 102712489 A | | | |
| JP | 2022-114539 | A | 08 August 2022 | (Family: none) | | | |
| JP | 2016-532055 | A | 13 October 2016 | US 2016/0222901 A1<br>claims, paragraph [0041]<br>EP 3052774 A1<br>CN 105531452 A<br>KR 10-2016-0055159 A | | | |
| WO | 2019/117183 | A1 | 20 June 2019 | US 2021/0069686 A1<br>entire text, all drawings<br>EP 3725743 A1<br>CN 111511685 A | | | |
| JP | 2003-260362 | A | 16 September 2003 | (Family: none) | | | |
| JP | 2018-506500 | A | 08 March 2018 | US 2018/0022611 A1<br>entire text, all drawings<br>EP 3256422 A1<br>KR 10-2017-0117075 A<br>CN 107848822 A | | | |

Form PCT/ISA/210 (patent family annex) (January 2015)

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007275877 A

**Non-patent literature cited in the description**

- *Materials Today: Proceedings*, 2021, vol. 42, 211-216